Europäisches Patentamt

European Patent Office

Office européen des brevets

(11) Veröffentlichungsnummer: **0 263 444 B1**

(12) **EUROPÄISCHE PATENTSCHRIFT**

(45) Veröffentlichungstag der Patentschrift: **30.12.92**

(21) Anmeldenummer: **87114408.5**

(22) Anmeldetag: **02.10.87**

(51) Int. Cl.⁵: **G11B 15/44**, G11B 15/665

(54) **Wickel- und Bandantrieb für eine Magnetbandkassette.**

(30) Priorität: **07.10.86 DE 3634086**

(43) Veröffentlichungstag der Anmeldung:
**13.04.88 Patentblatt 88/15**

(45) Bekanntmachung des Hinweises auf die
Patenterteilung:
**30.12.92 Patentblatt 92/53**

(84) Benannte Vertragsstaaten:
**AT BE CH DE ES FR GB GR IT LI LU NL SE**

(56) Entgegenhaltungen:
**EP-A- 0 087 952          EP-A- 0 191 647
EP-A- 0 211 302          DE-A- 3 126 012
GB-A- 2 094 542          US-A- 3 888 432**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Schandl, Hartmut, Dipl.-Ing.
Egerstrasse 2
W-7730 Villingen(DE)**
Erfinder: **Weisser, Fritz, Dipl.-Ing.
Kesselberg 15
W-7742 St. Georgen(DE)**

(74) Vertreter: **Einsel, Robert, Dipl.-Ing.
Deutsche Thomson-Brandt GmbH Patent-
und Lizenzabteilung Göttinger Chaussee 76
W-3000 Hannover 91(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Video- und Audiorecorder speichern die Information vorzugsweise auf Magnetband, das in einer Kassete auf zwei nebeneinanderliegenden Wickelkörpern untergebracht ist. Die Kassette ist dabei so eingelegt, daß die Wickelkörper kraftschlüssig in entsprechende Dorne der Antriebsmechanismen des Abspielgerätes einrasten.

In der älteren, gegenüber dem Prioritätstag der vorliegenden Anmeldung nicht veröffentlichten Patentanmeldung EP-A-0 211 302 ist beschrieben, daß der Antrieb sowohl des Magnetbandes d.h. der Capstan-Antrieb als auch der Antrieb der Wickelteller von einem Motor erfolgt, der auch für unterschiedliche Bandgeschwindigkeiten z.B. beim Umspulen oder auch im Bildsuchlaufbetrieb ohne Zuschalten zusätzlicher Zwischenräder den Antrieb übernimmt. Im Normalbetrieb, d.h. bei der durch die Systemnorm vorgeschriebenen Sollgeschwindigkeit wird der Antrieb der Wickelteller über die Antriebsseite einer Rutschkupplung mit Hilfe eines Schwenkrades vorgenommen, welches über einen Riemen angetrieben wird. Dabei ist die Capstan-Welle gleichzeitig Motorwelle, d.h. der Capstan wird direkt angetrieben.

Während des Umspulvorganges ist die Hauptbremse gelöst, während die Sperräder an den Rutschkupplungen beider Wickelteller im Eingriff sind. Das Drehmoment wird also nicht über die Rutschkupplungen sondern über die die Kupplung überbrückenden Sperräder übertragen. Dadurch wird erreicht, daß das notwendige volle Drehmoment an den Wickeltellern aufgebracht wird. Die Sperräder weisen ein Grundreibmoment auf, um Bandschlaufen zu verhindern.

Für den Fädelvorgang ist der Steuerschieber in einer Position, bei der das Sperrad am Abwickelteller nicht mehr anliegt, während das Sperrad am Aufwickelteller noch die Kupplung überbrückt. Zusätzlich ist in dieser Stellung des Steuerschiebers eine Sperrklinke wirksam, durch die das Sperrad am Aufwickelteller arretiert wird. Dadurch kann das Magnetband nur am Abwickelteller ein- oder ausgefädelt werden. Der Vorteil dieser Anordnung besteht darin, daß eine große Wiederkehrgenauigkeit für eine bestimmte Bandstelle auch beim Fädelvorgang erreicht wird.

Im Play-Betrieb, d.h. bei Aufnahme und Wiedergabe und auch im Suchlaufbetrieb vorwärts sind durch den Steuerschieber beide Sperräder von den Rutschkupplungen gelöst und die Andruckrolle für den Capstand-Antrieb wird in Eingriff gebracht. Außerdem wird der Bremszugfühler vom Fädelmotor an das Magnetband angelegt. Er steuert über eine Bandbremse den abwickelseitigen Teller. Der Antrieb der Wickelteller erfolgt mittels Schwenkrad über die Rutschkupplungen, wodurch eine konstante Drehzahl bei gleichzeitig unterschiedlichen Wikkeldurchmessern und außerdem eine Drehmomentbegrenzung erreicht wird.

Im Bildsuchlaufbetrieb rückwärts wird bei diesem Antrieb im Gegensatz zum Play-Betrieb der Bandzugfühler ausgeschwenkt, da in diesem Falle der Abwickelteller über das Schwenkrad angetrieben wird.

Da auch in diesem Betriebszustand das Band genau geführt werden muß, ist es notwendig, den aus der Kassette ablaufenden Bandast gespannt zu halten. Üblicherweise werden dafür eigene, gesteuerte Bremsen verwendet.

Es ist Aufgabe der Erfindung, für diese Betriebsart, nämlich Bildsuchlaufbetrieb rückwärts, eine einfache Möglichkeit für einen definierten Bandzug am ablaufenden Bandast aufzuzeigen.

Diese Aufgabe wird gemäß der Erfindung durch die im Anspruch 1 aufgeführten Merkmale gelöst. Vorteilhafte Weiterbildungen der Erfindung sind in den Unteransprüchen beschrieben.

Aus der GB-A-2 094 542 ist es bekannt, während des Bandsuchlaufbetriebes rückwärts die Rutschkupplung des eigentlichen Aufwickeltellers auch zum Spannen des Magnetbandes auszunutzen. Eine Überbrückung der Rutschkupplungen für den Umspulbetrieb ist dort jedoch nicht vorgesehen.

Im Prinzip wird bei Bandsuchlaufbetrieb rückwärts das Antriebszahnrad der Rutschkupplung am ablaufenden Bandast - also dem eigentlichen Aufwickelteller - mit einer Sperrklinke blockiert, die an einem Hebelarm angeordnet ist, der im Drehpunkt des dem Aufwickelteller zugeordneten Sperrades gelagert und so um einen Festpunkt drehbar ist, daß die Sperrklinke auf den Aufwickelteller zu bewegt werden kann, wenn das Sperrad vom Aufwickelteller weg bewegt wird. Da im Bandsuchlaufbetrieb das Sperrad durch den bereits erwähnten Steuerschieber von dem Aufwickelteller gelöst bzw. mit demselben nicht in Eingriff ist und die Sperrklinke im Suchlaufbetrieb rückwärts das Antriebszahnrad der Rutschkupplung blockiert, kommt die Rutschkupplung zur Wirkung, sodaß das Band entsprechend den Reibungseigenschaften der Rutschkupplung gespannt wird.

Anhand der Figur soll die Erfindung beispielhaft näher erläutert werden.

Fig.1 zeigt in einer Draufsicht den Wickelantrieb für eine Magnetbandkassette.

Fig.2 zeigt die Bandzugbremse für Rückwärtsspielbetrieb.

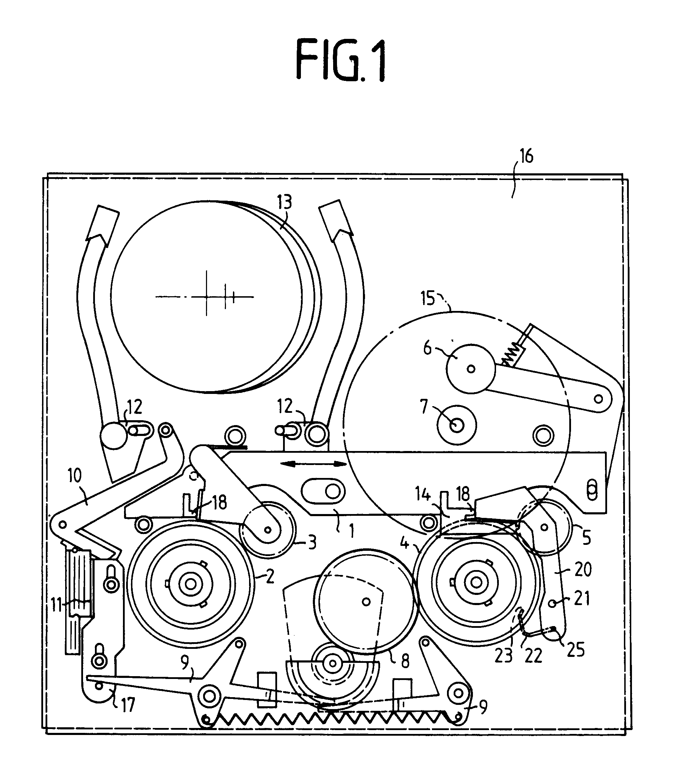

Fig.1 zeigt in einer Draufsicht den Wickelantrieb für eine Magnetbandkassette.Der Steuerschieber 1 befindet sich in einer Position, bei der das Sperrad 3 am Abwickelteller 2 nicht mehr in Eingriff ist, während das Sperrad 5 am Aufwickelteller 4 beide Teile der Rutschkupplung überbrückt. Zusätzlich ist das Sperrad 5 durch die Sperrklinke 14 arretiert. Die Andruckrolle 6 für den Capstanantrieb ist von der Capstanwelle 7 abgehoben. Diese durch den Steuerschieber 1 bewirkte Zuordnung der einzelnen Antriebsteile stellt den Fädelbetrieb dar. Das Magnetband wird dabei von den Fädelwagen 12 aus der Kassette herausgezogen und um die Kopftrommel 13 gelegt, oder in die Kassette zurückgeführt, wenn das Schwenkrad 8 durch den Für Capstan- und Wickeltellerantrieb wirkenden Motor 15 an den Abwickelteller 2 gelegt ist. Die Fädelwagen 12 werden über nicht dargestellte Fädelringe ebenso wie der Steuerschieber 1 und der Bandzugführer 10 von einem Fädelmotor über ein Kurvenrad angetrieben. Kurvenrad und Fädelmotor sind unterhalb der Chassisplatine 16 angeordnet und daher nicht dargestellt. Durch das Arretieren des Sperrades 5 während eines Fädelvorganges wird erreicht, daß das Magnetband durch den Vorgang in seiner Zuordnung zur Kopftrommel 13 nicht verschoben wird.

Die Hauptbremse 9, welche von einer Rutschkupplung 11 über einen Hebel 17 betätigt wird, ist in dieser Betriebsart nicht in Eingriff. Auch sie wird com Fädelmotor über das Kurvenrad gesteuert und wirkt im Stop-Betrieb direkt auf die Wickelteller. Außerdem ist im Stop-Betrieb der Schieber 1 soweit in Pfeilrichtung nach links verschoben, daß auch das Sperrad 3 die Kupplung vom Wickelteller 2 überbrückt, wobei die Sperrklinke 14 das Sperrad 5 freigibt. Für den Umspulbetrieb gilt mit Ausnahme der gelösten Hauptbremse 9 die gleiche Zuordnung von Steuerschieber 1 und Sperrrädern 3 und 5 wie bei Stop-Betrieb. Der Antrieb der Wickelteller erfolgt vom Motor 15 über einen unterhalb der Chassisplatine 16 befindlichen Treibriemen auf das Schwenkrad 8, welches am Antriebsteil der Rutschkupplung des jeweiligen Wickeltellers in Eingriff ist. Da jedoch über die Rutschkupplung nicht das volle erforderliche Drehmoment für den Umspulbetrieb übertragen werden kann, übernehmen in dieser Betriebsart die die Kupplungen überbrückenden Sperräder 3 bzw. 5 diese Aufgabe. Um einen guten Kraftschluß zu erreichen, sind Rutschkupplungsaußendurchmesser, Sperrad und Schwenkrad als Zahnräder mit gleichem Modul ausgebildet. Durch das Grundreibmoment, welches jedes Sperrad z.B. durch Zwischenlage eines Filzplättchens am führenden Mittelbolzen aufweist, ist auch im Umspulbetrieb für gute Bandspannung gesorgt.

Für den Play-Betrieb wird der Steuerschieber 1 in seine durch den Pfeil angedeutete rechte Anschlagstellung gebracht. Diese Stellung wird erst dann erreicht, wenn das Magnetband durch den Fädelvorgang um die Kopftrommel gelegt ist und der Bandzugfühler 10 in Eingriff ist. Durch die fest mit Steuerschieber 1 verbundenen Nasen 18 werden die Sperräder 3 und 5 von den Kupplungen der Wickelteller abgehoben. Die Andruckrolle 6 wird für den Magnetbandtransport gegen die Capstanwelle 7 geführt. Der Antrieb der Wickelteller 2 bzw. 4 geschieht durch das Schwenkrad 8 über in den Wickeltellern integrierten Rutschkupplungen. Für Bandvorlauf sowohl mit Normalgeschwindigkeit als auch veränderter Bildsuchlaufgeschwindigkeit wird der Abwickelteller 2 mittels einer nicht dargestellten Bandzugbremse, die vom Bandzugfühler 10 gesteuert ist, gebremst. Da im Bildsuchlaufbetrieb rückwärts der Abwickelteller 2 vom Schwenkrad 8 angetrieben wird, ist in dieser Betriebsart der Bandzugfühler und damit die Bandbremse ohne Funktion.

Um auch in dieser Betriebsart den von der Aufwickelspule ablaufenden Bandast gespannt zu halten, wird hierbei die Antriebsseite der Rutschkupplung von Aufwickelteller 4 durch eine Sperrklinke 22 arretiert, so daß die Rutschkupplung bei Abziehen des Bandes von der Aufwickelspule wirksam wird.

Die Sperrklinke 22 ist mit einem Sperradhebel 20 verbunden, der um einen Festpunkt 21 drehbar gelagert ist. In Eingriff gebracht wird Sperrklinke 22 durch die Lage von Sperrad 5, da ein Hebelarm von Sperrhebel 20 im Drehpunkt von Sperrad 5 gelagert ist. Dadurch ist sichergestellt, daß ausschließlich im Play-Betrieb die Sperrklinke 22 einrasten kann. Das Einschwenken der Sperrklinke 22 erfolgt drehrichtungsabhängig über ein Federelement 23, das auf der Planfläche der Antriebsseite des Wickeltellers gleitet und im Falle einer Rückwärtsdrehung dieses Tellers durch Reibung soweit verschoben, daß die Sperrklinke 22 in das Zahnrad einrasten kann.

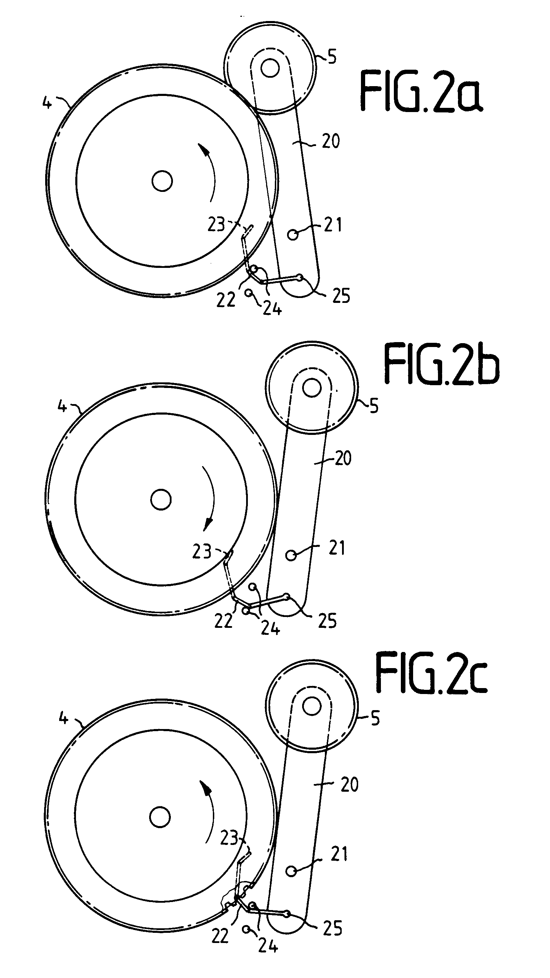

Fig.2 zeigt die Bandzugbremse für Rückwärtsspielbetrieb.

In Fig. 2a is die Stellung "Umspulen" rückwärts gezeigt. Der Aufwickelteller 4 dreht sich in Pfeilrichtung, also in Linkslaufrichtung. Das Sperrad 5 ist in Eingriff und überbrückt beide Kupplungszahnräder von Wickelteller 4. Dadurch durch ist Sperradhebel 20 vom Wickelteller abgeschwenkt, so daß die Sperrklinke 22 nicht mit dem Zahnrad auf der Rutschkupplungsantriebsseite in Eingriff kommen kann.

Fig. 2b zeigt den "Play-Betreib". Das Sperrad 5 ist nicht mehr im Eingriff. Über den Sperradhebel 20 wird die Sperrklinke 22 an das Kupplungszahnrad herangeführt. Sperrklinke 22, die gemeinsam mit dem Gleitstück 23 im Punkt 25 drehbar gelagert ist, kann allerdings nicht einrasten, da durch die Drehrichtung von Aufwickelteller 4 in Rechtslaufrichtung das als Federelement ausgebildete Gleitstück 23 durch die Anschläge 24 die Sperrklinke 22 vom Kupplungszahnrad abheben.

Fig. 2c zeigt den "Bildsuchlaufbetrieb" rückwärts. Durch die Drehrichtung des Aufwickeltellers 4 in Linkslaufrichtung und dadurch daß das Sperrrad 5 abgehoben hat, wird Sperrklinke 22 wie in Fig. 2b an das Kupplungszahnrad herangeführt. In dieser Drehrichtung wird das Gleichstück 23 durch die Anschläge 24 so geführt, daß die Sperrklinke 22 in das Antriebszahnrad des Aufwickeltellers 4 einrasten kann.

## Patentansprüche

1. Wickel- und Bandantrieb für eine Magnetbandkassette mit zwei nebeneinanderliegenden, das Magnetband führenden Wickelkörpern, in die jeweils ein über ein Schwenkrad (8) angetriebener Wickelteller (2, 4) eingreift, wobei jeder Wickelteller (2, 4) mit einer Rutschkupplung versehen ist und jeder Wickelteller und jeweiliges Antriebsteil der Rutschkupplung an ihrem Umfang so ausgebildet sind, daß die jeweilige Rutschkupplung für ein schnelles Umspulen des Magnetbandes jeweils durch ein beide Teile übergreifendes anschwenkbares Rad (3, 5), auch Sperrad genannt, überbrückbar ist, und mit einem im Drehpunkt des dem Aufwikkelteller (4) zugeordneten Sperrades (5) drehbar gelagerten Hebel (20), auch Sperrradhebel genannt, an dem eine Sperrklinke (22) beweglich angeordnet ist, mittels welcher die Antriebsseite der Rutschkupplung des Aufwickeltellers (4) arretiert wird, wenn die Bildsuchlaufbetriebsart rückwärts eingeschaltet ist, so daß während dieser die Rutschkupplung wirksam ist.

2. Wickel- und Bandantrieb nach Anspruch 1, **dadurch gekennzeichnet,** daß das Einschwenken der Sperrklinke (22) drehrichtungsabhängig über ein Federelement (23) erfolgt, welches auf der Planfläche der Antriebsseite von Aufwickelteller (4) gleitet und bei Rückwärtsdrehung des Tellers durch Reibung soweit verschoben wird, daß die Sperrklinke in die Antriebsseite der Rutschkupplung des Aufwickeltellers (4) einrastet.

3. Wickel- und Bandantrieb nach Anspruch 1, **dadurch gekennzeichnet,** daß die Sperrklinke (22) in ein Zahnrad auf der Antriebsseite der Rutschkupplung des Aufwickeltellers (4) einrastet.

## Claims

1. Winding and tape drive for a magnetic tape cassette with two mutually adjacent winding forms which guide the magnetic tape and with which in each case a reel (2,4) driven via a turning gear (8) engages, in which each reel (2,4) is provided with a sliding clutch and each reel and the corresponding drive part of the sliding clutch are so constructed at their periphery that for a rapid rewinding of the magnetic tape the respective sliding clutch can be by-passed in each case by a wheel (3,5) also called curb wheel, capable of being swivelled up and overlapping both parts, and with a lever (20), also called curb wheel lever, supported rotatably in the centre of rotation of the curb wheel (5) assigned to the take-up reel (4), there being movably arranged on said lever (20) a catch (22) by means of which the drive side of the sliding clutch of the take-up reel (4) is arrested if the reverse picture search operating mode is switched on, so that during the latter the sliding clutch is effective.

2. Winding and tape drive according to claim 1, **characterised in that** the pivoting of the catch (22) takes place as a function of the direction of rotation via a spring element (23) which slides on the plane face of the drive side of take-up reel (4) and on reverse rotation of the reel is displaced by friction to such an extent that the catch snaps into the drive side of the sliding clutch of the take-up reel (4).

3. Winding and tape drive according to claim 1, **characterised in that** the catch (22) snaps into a toothed wheel on the drive side of the sliding clutch of the take-up reel (4).

## Revendications

1. Entraînement d'enroulement et de bande pour une cassette de bande magnétique avec deux bobines juxtaposées qui guident la bande magnétique dans lesquelles s'engrène respectivement un plateau d'enroulement (2, 4) entraîné par une roue pivotante (8) chaque plateau d'enroulement (2, 4) étant pourvu d'un accouplement à glissement et chaque plateau d'enroulement et la partie entraînement respective de l'accouplement à glissement étant configurés sur leur périphérie de telle manière que l'accouplement à glissement respectif peut être surmonté pour un rebobinage rapide de la bande magnétique respectivement par une roue pivotante (3, 5), également désignée de roue de blocage, qui recouvre les deux parties et avec un levier (20), également désigné de levier de roue de blocage, positionné en étant rotatif dans le pivot de la roue de blocage (5) affectée au plateau d'enroulement (4), lever sur lequel est placé un cliquet de blocage (22) de manière mobile au moyen duquel le côté entraînement de l'accouplement à glissement du plateau d'enroulement (4) est arrêté lorsque le mode de recherche d'images en arrière est en circuit si bien que l'accouplement à glissement est efficace pendant ce mode.

2. Entraînement d'enroulement et de bande selon la revendication 1, **caractérisé en ce** que le pivotement du cliquet d'arrêt (22) est effectué en fonction de sens de rotation par un élément de ressort (23) qui glisse sur le plan transversal du côté entraînement du plateau d'enroulement (4) et qui est déplacé par frottement, lors de la rotation en arrière du plateau, de telle manière que le cliquet d'arrêt s'engrène dans le côté entraînement de l'accouplement à glissement du plateau d'enroulement (4).

3. Entraînement d'enroulement et de bande selon la revendication 1, **caractérisé en ce** que le cliquet d'arrêt (22) s'engrène dans une roue dentée sur le côté entraînement de l'accouplement à glissement du plateau d'enroulement (4).

# FIG.1

FIG.2a

FIG.2b

FIG.2c